# EUROPEAN PATENT SPECIFICATION

(11) **EP 3 699 997 B1**
(45) Date of publication and mention of the grant of the patent: **18.10.2023**
(21) Application number: 17929652.0
(22) Date of filing: 30.11.2017
(51) Int. Cl.: H01M 10/0567, H01M 10/0525, H01M 10/0568, H01M 10/0569

(54) **LITHIUM SECONDARY BATTERY ELECTROLYTE AND LITHIUM SECONDARY BATTERY COMPRISING THE SAME**
ELEKTROLYT FÜR LITHIUM-SEKUNDÄRBATTERIE UND LITHIUMSEKUNDÄRBATTERIE DENSELBEN UMFASSEND
ÉLECTROLYTE DE BATTERIE SECONDAIRE AU LITHIUM ET BATTERIE SECONDAIRE AU LITHIUM LE COMPRENANT

(30) Priority: 24.10.2017 CN 201711004120
(43) Date of publication of application: 26.08.2020
(73) Proprietor: Guangzhou Tinci Materials Technology Co., Ltd, Guangzhou, Guangdong 510760 (CN)
(72) Inventor: FAN, Weizhen, Guangzhou Guangdong 510760 (CN); YU, Le, Guangzhou Guangdong 510760 (CN); ZHAO, Jingwei, Guangzhou Guangdong 510760 (CN)
(74) Representative: Mewburn Ellis LLP
(86) International application number: PCT/CN2017/113955
(87) International publication number: WO 2019/080258

(56) References cited:
- EP-A1- 1 650 826
- EP-A1- 1 772 924
- EP-A1- 2 768 064
- WO-A1-2017/061464
- CN-A- 106 663 838
- CN-A- 106 784 997
- CN-A- 106 876 786
- US-A1- 2009 053 598
- US-B1- 6 479 191
- K. ABE ET AL: "Functional electrolytes - Triple-Bonded Compound as an Additive for Negative Electrode", JOURNAL OF THE ELECTROCHEMICAL SOCIETY, vol. 154, no. 8, 22 June 2007 (2007-06-22) , pages A810-A815, XP002699187, ISSN: 0013-4651, DOI: 10.1149/1.2746570 [retrieved on 2007-06-22]

## Description

### TECHNICAL FIELD

The present disclosure relates to the field of lithium secondary battery technology, in particular, to lithium secondary battery electrolytes and lithium secondary batteries containing the same.

### BACKGROUND

In recent years, lithium secondary batteries have received attentions and developments in various industries due to their high energy densities. Compared with other rechargeable batteries, the lithium secondary batteries have the advantages of high energy density, high operating voltage, long cycle life, fast charge and discharge, and green environmental protection. At present, the lithium ion secondary batteries have good application prospects in portable 3C electronic devices such as mobile phones and notebook computers, high-power batteries, energy storage and the like.

In order to improve high-temperature performance of the lithium ion batteries, solvents with relatively high boiling points such as diethyl carbonate and ethyl methyl carbonate are usually selected as main solvents of the electrolytes. However, as the melting points of these solvents are relatively high, the conductivities of the electrolytes at a low temperature decrease very quickly, and the battery impedances increase rapidly, which make it difficult to satisfy the low-temperature discharge performances of the batteries. In order to improve low-temperature performance of the batteries, carboxylic acid esters with lower melting points, such as ethyl acetate and ethyl propionate, are usually selected as the main solvents of the electrolytes. However, these solvents have relatively low boiling points, which is detrimental to the high-temperature performance of the batteries. In terms of additives, in order to improve the high-temperature performance, the additives such as vinylene carbonate and vinyl ethylene carbonate are usually used. However, such additives will cause relatively large battery impedances. Especially at low temperatures, the battery impedances increase significantly, resulting in the reduced low-temperature performance of the batteries. The patent application CN 102142580 A discloses an electrolyte for both high and low temperature used 300Ah lithium iron phosphate battery, in which, by adding different additives into the electrolyte, the conductivity of the electrolyte is improved in principle and the low-temperature performance of the battery is improved. However, no example showing improvement in high-temperature performance is disclosed.

The patent application CN 103579665 A discloses a gel lithium ion battery with both good high-temperature performance and good low-temperature performance and a preparing method thereof. Such battery has good high temperature and low temperature endurances, simple preparation method, low cost, and is easy to be industrialized. However, it belongs to a gel electrolyte, not to a conventional liquid electrolyte.

Improving both the high-temperature performance and low-temperature performance of the battery through the electrolyte is a difficult task. Therefore, it is necessary to develop an electrolyte that can improve both the high-temperature performance and low-temperature performance of the battery at the same time.

EP2768064A1 discloses an electrolyte composition containing at least one aprotic organic solvent, at least one conducting salt, and at least one propargyl-containing compound, and optionally at least one further additive.

EP1772924A1 discloses a nonaqueous electrolytic solution for a lithium secondary battery, in which 0.01 to 10 wt.% of a sulfur-containing acid ester and 0.01 to 10 wt.% of a triple bond-containing compound are dissolved in a nonaqueous solvent, and a lithium secondary battery employing the nonaqueous electrolytic solution.

US2009053598A1 discloses a nonaqueous electrolytic solution for a lithium secondary battery, in which an electrolyte salt is dissolved in a nonaqueous solvent, containing 0.1 to 10% by weight of an ethylene carbonate derivative, and 0.01 to 10% by weight of a triple bond-containing compound and/or a pentafluorophenyloxy compound.

EP1650826A1 discloses a non-aqueous electrolytic solution, in which an electrolyte salt is dissolved in a non-aqueous solvent. The non-aqueous electrolytic solution further contains a vinylene carbonate compound in an amount of 0.01 to 10 wt.%, and an alkyne compound in an amount of 0.01 to 10 wt.%.

Koji Abe et al 2007 J. Electrochem. Soc. 154 A810 discloses triple-bonded compounds to improve battery performance, especially in cycleability.

US6479191B1 discloses an electrolyte for a lithium secondary battery comprising a non-aqueous solvent, especially consists essentially of a high dielectric solvent and a low viscosity solvent, and an electrolyte salt, dissolved therein, and an alkyne derivative or an alkyne carbonate derivative.

WO2017061464A1 and US2018301758A1 disclose a nonaqueous electrolytic solution for an energy storage device, which is a nonaqueous electrolytic solution having an electrolyte salt dissolved in a nonaqueous solvent, the nonaqueous electrolytic solution containing 0.1 to 4% by mass of 1,3-dioxane and further containing 0.1 to 4% by mass of a compound having a carbon-carbon triple bond.

CN106663838A and EP3176864A1 disclose a nonaqueous electrolytic solution where an electrolyte salt is dissolved to a nonaqueous solvent, wherein the electrolyte salt includes at least one kind of first lithium salt selected from a group consisting of LiPF₆, LiBF₄, LiN(SO2F)₂, LiN(SO2CF3)₂, and LiN(SO₂C₂F₅)₂, at least two kinds of second lithium salts selected from a group consisting of a lithium salt having an oxalic acid structure, a lithium salt having a phosphoric acid structure, and a lithium salt including a S=O group, and at least one kind of tertiary carboxylic acid ester is contained.

### SUMMARY

Accordingly, an object of the present disclosure is to provide a lithium secondary battery electrolyte.

The specific technical solutions are as follows.

A lithium secondary battery electrolyte contains an organic solvent, a conductive lithium salt, 2-propynyl methyl carbonate and an additive. The additive is at least one selected from lithium difluorodioxalate phosphate, lithium tetrafluorooxalate phosphate, 1,3,2-dioxathiolane 2,2-dioxide and 1-propyl phosphate cyclic anhydride.

The 2-propynyl methyl carbonate accounts for 0.1%-5.0% of a total mass of the lithium secondary battery electrolyte.

In one of the embodiments, the additive is at least one selected from lithium difluorodioxalate phosphate and 1-propyl phosphate cyclic anhydride, and the additive accounts for 0.1%-6.0% of a total mass of the lithium secondary battery electrolyte.

In one of the embodiments, the conductive lithium salt is at least one of lithium hexafluorophosphate or lithium bis(fluorosulfonyl)imide, and the conductive lithium salt accounts for 8.0%-18.0% of a total mass of the lithium secondary battery electrolyte.

In one of the embodiments, the organic solvent consists of a cyclic solvent and a linear solvent. The mass ratio of the cyclic solvent to the linear solvent is (1-3):3.

The organic solvent accounts for 71.0%-91.8% of the total mass of the lithium secondary battery electrolyte.

In one of the embodiments, the cyclic solvent is at least one selected from ethylene carbonate, propylene carbonate, γ-butyrolactone and 1,4-butane sultone.

In one of the embodiments, the linear solvent is at least one selected from dimethyl carbonate, ethyl methyl carbonate, diethyl carbonate, ethyl acetate, propyl propionate, 1,1,2,2-tetrafluoroethyl-2,2,3,3-tetrafluoropropylether and 2,2-difluoroethyl acetate.

Another object of the present disclosure is to provide a lithium secondary battery.

The lithium secondary battery contains the lithium secondary battery electrolyte as described above (and also a positive electrode sheet containing positive active materials, a negative electrode sheet containing negative active materials and a separator).

In the lithium secondary battery, the positive active material is a metal compound containing lithium. The metal compound containing lithium is at least one of Li₁₊ₐ(NiₓCo_{y}M_{1-x-y})O₂, Li(NiₚMn_{q}Co_{2-p-q})O₄, LiMₕ(PO₄)ₘ, wherein, 0≤a≤0.3, 0≤x≤1, 0≤y≤1, 0<x+y≤1, 0≤p≤2, 0≤q≤2, 0<p+q≤2, M is Fe, Ni, Co, Mn, Al 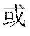 V, 0< h<5, 0<m<5. The negative active material is at least one of lithium metal, lithium alloy, carbon material, silicon-based material and tin-based material.

The lithium secondary battery electrolyte has the following advantages and beneficial effects:

Adding 2-propynyl methyl carbonate into the electrolyte in combination with lithium difluorodioxalate phosphate, lithium tetrafluorooxalate phosphate, 1,3,2-dioxathiolane 2,2-dioxide and 1-propyl phosphate cyclic anhydride can improve the room-temperature cycle performance, high-temperature storage performance and low-temperature discharge performance of the electrolyte.

### DETAILED DESCRIPTION OF THE EMBODIMENTS

For the convenience of understanding of the present disclosure, the present disclosure will be more fully described. However, the present disclosure can be implemented in many different forms and is not limited to the embodiments described herein. In contrast, the purpose of providing these embodiments is to provide a fully and thoroughly understanding of the disclosure of the present disclosure.

Unless defined otherwise, all technical and scientific terms used by the present disclosure have the same meanings as commonly understood by those skilled in the art to which present disclosure belongs. The terms used in the specification of the present disclosure are only for describing specific embodiments, and are not intended to limit the present disclosure.

Reference Example 1 (not according to the invention)

A lithium secondary battery electrolyte of this example consists of an organic solvent, a conductive lithium salt, 2-propynyl methyl carbonate and an additive. The organic solvent accounts for 77.0% of the total mass of the lithium secondary battery electrolyte, and consists of a cyclic solvent (ethylene carbonate) and a linear solvent

(ethyl methyl carbonate). The mass ratio of the ethylene carbonate and the ethyl methyl carbonate is 1:1. The conductive lithium salt is lithium hexafluorophosphate, which accounts for 18.0% of the total mass of the lithium secondary battery electrolyte. The 2-propynyl methyl carbonate accounts for 5.0% of the total mass of the electrolyte. The electrolyte of this example is applied in a LiNi_{0.8}Co_{0.1}Mn_{0.1}O₂/graphite soft-pack battery.

### Example 2

A lithium secondary battery electrolyte of this example consists of an organic solvent, a conductive lithium salt, 2-propynyl methyl carbonate and additives. The organic solvent accounts for 82.0% of the total mass of the lithium secondary battery electrolyte, and consists of a cyclic solvent (ethylene carbonate) and a linear solvent (dimethyl carbonate). The mass ratio of the ethylene carbonate and the dimethyl carbonate is 1:2. The conductive lithium salt is lithium hexafluorophosphate, which accounts for 15.0% of the total mass of the lithium secondary battery electrolyte. The 2-propynyl methyl carbonate accounts for 0.5% of the total mass of the electrolyte. The additives are lithium difluorodioxalate phosphate and 1,3,2-dioxathiolane 2,2-dioxide, which account for 0.5% and 2.0% of the total mass of the electrolyte, respectively. The electrolyte of this example is applied in a LiNi_{0.8}Co_{0.1}Mn_{0.1}O₂/silicon carbon soft-pack battery.

### Example 3

A lithium secondary battery electrolyte of this example consists of an organic solvent, a conductive lithium salt, 2-propynyl methyl carbonate and additives. The organic solvent accounts for 84.0% of the total mass of the lithium secondary battery electrolyte, and consists of a cyclic solvent (ethylene carbonate) and a linear solvent (diethyl carbonate). The mass ratio of the ethylene carbonate and the diethyl carbonate is 1:3. The conductive lithium salt is lithium hexafluorophosphate, which accounts for 12.0% of the total mass of the lithium secondary battery electrolyte. The 2-propynyl methyl carbonate accounts for 1.0% of the total mass of the electrolyte. The additives are lithium tetrafluorooxalate phosphate and 1,3,2-dioxathiolane 2,2-dioxide, which account for 1.0% and 2.0% of the total mass of the electrolyte, respectively. The electrolyte of this example is applied in a LiNi_{0.6}Co_{0.2}Mn_{0.2}O₂/graphite soft-pack battery.

### Example 4

A lithium secondary battery electrolyte of this example consists of an organic solvent, a conductive lithium salt, 2-propynyl methyl carbonate and additives. The organic solvent accounts for 84.0% of the total mass of the lithium secondary battery electrolyte, and consists of cyclic solvents (ethylene carbonate, propylene carbonate) and linear solvents (ethyl methyl carbonate, propyl propionate). The mass ratio of the ethylene carbonate, the propylene carbonate, the ethyl methyl carbonate and the propyl propionate is 1:0.5:1:1. The conductive lithium salt is lithium hexafluorophosphate, which accounts for 12.0% of the total mass of the lithium secondary battery electrolyte. The 2-propynyl methyl carbonate accounts for 1.0% of the total mass of the electrolyte. The additives are 1-propyl phosphate cyclic anhydride, lithium tetrafluorooxalate phosphate and 1,3,2-dioxathiolane 2,2-dioxide, which account for 1.0%, 0.5% and 1.5% of the total mass of the electrolyte, respectively. The electrolyte of this example is applied in a LiNi_{0.6}Co_{0.2}Mn_{0.2}O₂/silicon carbon soft-pack battery.

### Example 5

A lithium secondary battery electrolyte of this example consists of an organic solvent, a conductive lithium salt, 2-propynyl methyl carbonate and an additive. The organic solvent accounts for 89.5% of the total mass of the lithium secondary battery electrolyte, and consists of a cyclic solvent (ethylene carbonate) and linear solvents (ethyl methyl carbonate, 1,1,2,2-tetrafluoroethyl-2,2,3,3-tetrafluoropropylether). The mass ratio of the ethylene carbonate, the propylene carbonate, the ethyl methyl carbonate and the 1,1,2,2-tetrafluoroethyl-2,2,3,3-tetrafluoropropylether is 1:2:0.5. The conductive lithium salt is lithium hexafluorophosphate, which accounts for 8.5% of the total mass of the lithium secondary battery electrolyte. The 2-propynyl methyl carbonate accounts for 1.0% of the total mass of the electrolyte. The additive is lithium difluorodioxalate phosphate, which accounts for 2.0% of the total mass of the electrolyte. The electrolyte of this example is applied in a LiNi_{0.5}Co_{0.2}Mn_{0.3}O₂/graphite soft-pack battery.

### Example 6

A lithium secondary battery electrolyte of this example consists of an organic solvent, a conductive lithium salt, 2-propynyl methyl carbonate and an additive. The organic solvent accounts for 89.5% of the total mass of the lithium secondary battery electrolyte, and consists of a cyclic solvent (ethylene carbonate) and a linear solvent (ethyl methyl carbonate). The mass ratio of the ethylene carbonate and the ethyl methyl carbonate is 1:1. The conductive lithium salt is lithium hexafluorophosphate, which accounts for 8.5% of the total mass of the lithium secondary battery electrolyte. The 2-propynyl methyl carbonate accounts for 1.0% of the total mass of the electrolyte. The additive is lithium tetrafluorooxalate phosphate, which accounts for 2.0% of the total mass of the electrolyte. The electrolyte of this example is applied in a LiNi_{0.5}Co_{0.2}Mn_{0.3}O₂/ silicon carbon soft-pack battery.

### Example 7

A lithium secondary battery electrolyte of this example consists of an organic solvent, a conductive lithium salt, 2-propynyl methyl carbonate and an additive. The organic solvent accounts for 84.0% of the total mass of the lithium secondary battery electrolyte, and consists of a cyclic solvent (ethylene carbonate) and a linear solvent (ethyl methyl carbonate). The mass ratio of the ethylene carbonate and the ethyl methyl carbonate is 1:1. The conductive lithium salt is lithium hexafluorophosphate, which accounts for 13.0% of the total mass of the lithium secondary battery electrolyte. The 2-propynyl methyl carbonate accounts for 2.0% of the total mass of the electrolyte. The additive is 1-propyl phosphate cyclic anhydride, which accounts for 1.0% of the total mass of the electrolyte. The electrolyte of this example is applied in a LiCoO₂/graphite soft-pack battery.

### Example 8

A lithium secondary battery electrolyte of this example consists of an organic solvent, a conductive lithium salt, 2-propynyl methyl carbonate and additives. The organic solvent accounts for 83.0% of the total mass of the lithium secondary battery electrolyte, and consists of a cyclic solvent (ethylene carbonate) and a linear solvent (ethyl methyl carbonate). The mass ratio of the ethylene carbonate and the ethyl methyl carbonate is 1:1. The conductive lithium salt is lithium hexafluorophosphate, which accounts for 13.0% of the total mass of the lithium secondary battery electrolyte. The 2-propynyl methyl carbonate accounts for 3.0% of the total mass of the electrolyte. The additives are lithium difluorodioxalate phosphate and 1-propyl phosphate cyclic anhydride, which account for 0.5% and 0.5% of the total mass of the electrolyte, respectively. The electrolyte of this example is applied in a LiNi_{0.6}Co_{0.2}Mn_{0.2}O₂/silicon carbon soft-pack battery.

### Example 9

A lithium secondary battery electrolyte of this example consists of an organic solvent, conductive lithium salts, 2-propynyl methyl carbonate and an additive. The organic solvent accounts for 80.5% of the total mass of the lithium secondary battery electrolyte, and consists of a cyclic solvent (ethylene carbonate) and a linear solvent (ethyl methyl carbonate). The mass ratio of the ethylene carbonate and the ethyl methyl carbonate is 1:1. The conductive lithium salts are lithium hexafluorophosphate and lithium bis(fluorosulfonyl)imide, which account for 10.0% and 4.5% of the total mass of the lithium secondary battery electrolyte. The 2-propynyl methyl carbonate accounts for 4.5% of the total mass of the electrolyte. The additive is lithium tetrafluorooxalate phosphate, which accounts for 0.5% of the total mass of the electrolyte. The electrolyte of this example is applied in a LiNi_{0.6}Co_{0.2}Mn_{0.2}O₂/graphite soft-pack battery.

### Example 10

A lithium secondary battery electrolyte of this example consists of an organic solvent, conductive lithium salts, 2-propynyl methyl carbonate and an additive. The organic solvent accounts for 84.0% of the total mass of the lithium secondary battery electrolyte, and consists of a cyclic solvent (ethylene carbonate) and a linear solvent (ethyl methyl carbonate). The mass ratio of the ethylene carbonate and the ethyl methyl carbonate is 1:1. The conductive lithium salts are lithium hexafluorophosphate and lithium bis(fluorosulfonyl)imide, which account for 8.0% and 3.0% of the total mass of the lithium secondary battery electrolyte. The 2-propynyl methyl carbonate accounts for 4.5% of the total mass of the electrolyte. The additive is lithium difluorodioxalate phosphate, which accounts for 0.5% of the total mass of the electrolyte. The electrolyte of this example is applied in a LiNi_{0.6}Co_{0.2}Mn_{0.2}O₂/graphite soft-pack battery.

### Comparative example 1

The preparing method of an electrolyte of this comparative example is the same as that of the example 1, except that 2-propynyl methyl carbonate is not contained. This electrolyte is applied in a battery by the same method as the example 1, to test its performance.

### Comparative example 2

The preparing method of an electrolyte of this comparative example is the same as that of the example 2, except that 2-propynyl methyl carbonate is not contained. This electrolyte is applied in a battery by the same method as the example 2, to test its performance.

### Comparative example 3

The preparing method of an electrolyte of this comparative example is the same as that of the example 3, except that 2-propynyl methyl carbonate is not contained. This electrolyte is applied in a battery by the same method as the example 3, to test its performance.

### Comparative example 4

The preparing method of an electrolyte of this comparative example is the same as that of the example 4, except that 2-propynyl methyl carbonate is not contained. This electrolyte is applied in a battery by the same method as the example 4, to test its performance.

### Comparative example 5

The preparing method of an electrolyte of this comparative example is the same as that of the example 5, except that 2-propynyl methyl carbonate is not contained. This electrolyte is applied in a battery by the same method as the example 5, to test its performance.

### Comparative example 6

The preparing method of an electrolyte of this comparative example is the same as that of the example 6, except that 2-propynyl methyl carbonate is not contained. This electrolyte is applied in a battery by the same method as the example 6, to test its performance.

### Comparative example 7

The preparing method of an electrolyte of this comparative example is the same as that of the example 7, except that 2-propynyl methyl carbonate is not contained. This electrolyte is applied in a battery by the same method as the example 7, to test its performance.

### Comparative example 8

The preparing method of an electrolyte of this comparative example is the same as that of the example 8, except that 2-propynyl methyl carbonate is not contained. This electrolyte is applied in a battery by the same method as the example 8, to test its performance.

### Comparative example 9

The preparing method of an electrolyte of this comparative example is the same as that of the example 9, except that 2-propynyl methyl carbonate is not contained. This electrolyte is applied in a battery by the same method as the example 9, to test its performance.

### Comparative example 10

The preparing method of an electrolyte of this comparative example is the same as that of the example 10, except that 2-propynyl methyl carbonate is not contained. This electrolyte is applied in a battery by the same method as the example 10, to test its performance.

### Application experiments of examples and comparative examples:

The lithium secondary battery prepared in the above examples 1 to 10 and comparative examples 1 to 10 are subjected to room-temperature cycle, high-temperature storage and low-temperature discharge tests.

Charge and discharge conditions: in order to test the charge and discharge performance of the battery containing the electrolyte prepared by the present disclosure, the following operations were performed: preparing positive and negative electrode sheets by a conventional method; injecting the electrolyte prepared by the individual example into a 053048-type soft-pack battery prepared by using the electrode sheets in a glovebox; performing a charge and discharge test on the prepared 053048-type soft-pack battery by using a neware (BS-9300R-type) battery testing system, and comparing it with the battery containing the electrolyte prepared by the corresponding comparative example. The prepared batteries are charge-discharge cycled at room temperature at 1C rate between 3.0V and 4.2V; discharged after being stored at 60°C for 15 days at a fully charged state; discharged at 1C rate at -20°C. The capacity retentions of the batteries after 300 cycles at room temperature, the discharge capacity retentions of the batteries after the storage at 60°C for 15 days at the fully charge state, the discharge capacity retentions at 1C rate at -20°C were recorded. The results are shown in Table 1.

**Table 1 test results after charge and discharge cycles, high-temperature storage and low-temperature discharge in examples and comparative examples**

| Test index | Capacity retention of the battery after 300 cycles at room temperature | Capacity retention of the battery discharged after storage at high temperature | Capacity retention of the battery discharged at low temperature |
|---|---|---|---|
| Reference Example 1 | 93.8% | 95.6% | 81.7% |
| Example 2 | 94.3% | 93.2% | 78.6% |
| Example 3 | 89.7% | 95.7% | 76.8% |
| Example 4 | 94.5% | 94.8% | 77.4% |
| Example 5 | 90.1% | 96.3% | 75.6% |
| Example 6 | 91.3% | 95.2% | 74.3% |
| Example 7 | 89.1% | 96.4% | 73.6% |
| Example 8 | 87.4% | 92.1% | 72.5% |
| Example 9 | 92.1% | 93.7% | 75.6% |
| Example 10 | 96.3% | 94.9% | 74.7% |
| Comparative Example 1 | 74.1% | 76.5% | 52.5% |
| Comparative Example 2 | 65.8% | 69.4% | 52.7% |
| Comparative Example 3 | 61.5% | 71.2% | 56.7% |
| Comparative Example 4 | 59.3% | 65.6% | 54.3% |
| Comparative Example 5 | 64.7% | 67.8% | 55.7% |
| Comparative Example 6 | 63.6% | 65.4% | 53.9% |
| Comparative Example 7 | 59.9% | 69.8% | 54.9% |
| Comparative Example 8 | 72.0% | 72.9% | 56.2% |
| Comparative Example 9 | 70.1% | 74.3% | 57.3% |
| Comparative Example 10 | 68.7% | 72.5% | 54.8% |

From Table 1, it can be seen that comparing with comparative examples 1 to 10, in examples 1 to 10, adding different proportions of the 2-propynyl methyl carbonate into the electrolyte can significantly improve the cycle performance, high-temperature storage performance and low-temperature discharge performance.

Each technical features of the embodiments described above can be arbitrarily combined. In order to simplify the description, all possible combinations of each technical features in the above embodiments have not been described. However, as long as there is no contradiction in the combination of these technical features, it should be considered as that all of them fall within the scope recorded in this specification.

The above described embodiments only present several implementation manners of the present disclosure, and descriptions thereof are more specific and detailed, but they cannot be understood as limiting the scope of the application patent. Therefore, the protection scope of this application patent shall be subject to the appended claims.

## Claims

1. A lithium secondary battery electrolyte, comprising an organic solvent, a conductive lithium salt, 2-propynyl methyl carbonate and an additive, **characterized in that** the additive is at least one selected from lithium difluorodioxalate phosphate, lithium tetrafluorooxalate phosphate, 1,3,2-dioxathiolane 2,2-dioxide and 1-propyl phosphate cyclic anhydride.

2. The lithium secondary battery electrolyte according to claim 1, **characterized in that** the 2-propynyl methyl carbonate accounts for 0.1%-5.0% of a total mass of the lithium secondary battery electrolyte.

3. The lithium secondary battery electrolyte according to claim 1, **characterized in that** the additive is at least one selected from lithium difluorodioxalate phosphate and 1-propyl phosphate cyclic anhydride.

4. The lithium secondary battery electrolyte according to claim 1, **characterized in that** the additive accounts for 0.1%-6.0% of a total mass of the lithium secondary battery electrolyte.

5. The lithium secondary battery electrolyte according to claim 1, **characterized in that** the conductive lithium salt is at least one of lithium hexafluorophosphate or lithium bis(fluorosulfonyl)imide, and the conductive lithium salt accounts for 8.0%-18.0% of a total mass of the lithium secondary battery electrolyte.

6. The lithium secondary battery electrolyte according to claim 1, **characterized in that** the organic solvent consists of a cyclic solvent and a linear solvent.

7. The lithium secondary battery electrolyte according to claim 6, **characterized in that** the cyclic solvent is at least one selected from ethylene carbonate, propylene carbonate, γ-butyrolactone and 1,4-butane sultone.

8. The lithium secondary battery electrolyte according to claim 6, **characterized in that** the linear solvent is at least one selected from dimethyl carbonate, ethyl methyl carbonate, diethyl carbonate, ethyl acetate, propyl propionate, 1,1,2,2-tetrafluoroethyl-2,2,3,3-tetrafluoropropylether and 2,2-difluoroethyl acetate.

9. A lithium secondary battery, **characterized by** comprising the lithium secondary battery electrolyte according to any one of claims 1 to 8.

## Patentansprüche

1. Lithium-Akkumulator-Elektrolyt, der ein organisches Lösungsmittel, ein leitendes Lithiumsalz, 2-Propinylmethylcarbonat und ein Additiv umfasst, **dadurch gekennzeichnet, dass** das Additiv zumindest eines, ausgewählt aus Lithiumdifluoro(dioxalato)phosphat, Lithiumtetrafluoro(oxalato)phosphat, 1,3,2-Dioxathiolan-2,2-dioxid und zyklischem 1-Propanphosphonsäureanhydrid ist.

2. Lithium-Akkumulator-Elektrolyt nach Anspruch 1, **dadurch gekennzeichnet, dass** das 2-Propinylmethylcarbonat 0,1 % bis 5,0 % der Gesamtmasse des Lithium-Akkumulator-Elektrolyten ausmacht.

3. Lithium-Akkumulator-Elektrolyt nach Anspruch 1, **dadurch gekennzeichnet, dass** das Additiv zumindest eines, ausgewählt aus Lithiumdifluoro(dioxalato)phosphat und zyklischem 1-Propanphosphonsäureanhydrid ist.

4. Lithium-Akkumulator-Elektrolyt nach Anspruch 1, **dadurch gekennzeichnet, dass** das Additiv 0,1 % bis 6,0 % der Gesamtmasse des Lithium-Akkumulator-Elektrolyten ausmacht.

5. Lithium-Akkumulator-Elektrolyt nach Anspruch 1, **dadurch gekennzeichnet, dass** das leitende Lithiumsalz zumindest eines aus Lithiumhexafluorophosphat und Lithium-bis(fluorsulfonyl)imid ist und das leitende Lithiumsalz 8,0 % bis 18,0 % der Gesamtmasse des Lithium-Akkumulator-Elektrolyten ausmacht.

6. Lithium-Akkumulator-Elektrolyt nach Anspruch 1, **dadurch gekennzeichnet, dass** das organische Lösungsmittel aus einem zyklischen Lösungsmittel und einem unverzweigten Lösungsmittel besteht.

7. Lithium-Akkumulator-Elektrolyt nach Anspruch 6, **dadurch gekennzeichnet, dass** das zyklische Lösungsmittel zumindest eines, ausgewählt aus Ethylencarbonat, Propylencarbonat, y-Butyrolacton und 1,4-Butansulton ist.

8. Lithium-Akkumulator-Elektrolyt nach Anspruch 6, **dadurch gekennzeichnet, dass** das unverzweigte Lösungsmittel zumindest eines, ausgewählt aus Dimethylcarbonat, Ethylmethylcarbonat, Diethylcarbonat, Ethylacetat, Propylpropionat, 1,1,2,2-Tetrafluorethyl-2,2,3,3-tetrafluorpropylether und 2,2-Difluorethylacetat ist.

9. Lithium-Akkumulator, **dadurch gekennzeichnet, dass** er einen Lithium-Akkumulator-Elektrolyten nach einem der Ansprüche 1 bis 8 umfasst.

## Revendications

1. Electrolyte de batterie secondaire au lithium, comprenant un solvant organique, un sel de lithium conducteur, du carbonate de 2-propynylméthyle et un additif, **caractérisé en ce que** l'additif est au moins un choisi parmi le difluorodioxalate phosphate de lithium, le tétrafluorooxalate phosphate de lithium, le 2,2-dioxyde de 1,3,2-dioxathiolane et l'anhydride cyclique de phosphate de 1-propyle.

2. Electrolyte de batterie secondaire au lithium selon la revendication 1, **caractérisé en ce que** le carbonate de 2-propynylméthyle représente de 0,1 % à 5,0 % d'une masse totale de l'électrolyte de batterie secondaire au lithium.

3. Electrolyte de batterie secondaire au lithium selon la revendication 1, **caractérisé en ce que** l'additif est au moins un choisi parmi le phosphate de difluorodioxalate de lithium et l'anhydride cyclique de phosphate de 1-propyle.

4. Electrolyte de batterie secondaire au lithium selon la revendication 1, **caractérisé en ce que** l'additif représente de 0,1 % à 6,0 % d'une masse totale de l'électrolyte de batterie secondaire au lithium.

5. Electrolyte de batterie secondaire au lithium selon la revendication 1, **caractérisé en ce que** le sel de lithium conducteur est au moins l'un de l'hexafluorophosphate de lithium ou du bis(fluorosulfonyl)imide de lithium, et le sel de lithium conducteur représente de 8,0 % à 18,0 % d'une masse totale de l'électrolyte de batterie secondaire au lithium.

6. Electrolyte de batterie secondaire au lithium selon la revendication 1, **caractérisé en ce que** le solvant organique consiste en un solvant cyclique et un solvant linéaire.

7. Electrolyte de batterie secondaire au lithium selon la revendication 6, **caractérisé en ce que** le solvant cyclique est au moins un choisi parmi le carbonate d'éthylène, le carbonate de propylène, la γ-butyrolactone et la 1,4-butane sultone.

8. Electrolyte de batterie secondaire au lithium selon la revendication 6, **caractérisé en ce que** le solvant linéaire est au moins un choisi parmi le carbonate de diméthyle, le carbonate d'éthyle méthyle, le carbonate de diéthyle, l'acétate d'éthyle, le propionate de propyle, le 1,1,2,2-tétrafluoroéthyl-2,2,3,3-tétrafluoropropyléther et l'acétate de 2,2-difluoroéthyle.

9. Batterie secondaire au lithium, **caractérisée en ce qu'**elle comprend l'électrolyte de batterie secondaire au lithium selon l'une quelconque des revendications 1 à 8.
